# EUROPÄISCHE PATENTSCHRIFT

(11) **EP 2 398 640 B1**
(45) Veröffentlichungstag und Bekanntmachung des Hinweises auf die Patenterteilung: **05.06.2013**
(21) Anmeldenummer: 10701804.6
(22) Anmeldetag: 04.01.2010
(51) Int. Cl.: B32B 5/00, F41H 1/02

(54) **TEXTILMATERIAL MIT ERHÖHTER MECHANISCHER STABILITÄT, INSBESONDERE MIT ERHÖHTER STICH- UND/ODER SCHUSSFESTIGKEIT**
TEXTILE MATERIAL HAVING INCREASED MECHANICAL STRENGTH, IN PARTICULAR HAVING INCREASED RESISTANCE TO PIERCING OR SHOOTING
MATIÈRE TEXTILE À STABILITÉ MÉCANIQUE ACCRUE, AYANT NOTAMMENT UNE RÉSISTANCE ACCRUE AUX PERFORATIONS ET/OU AUX PROJECTILES

(30) Priorität: 23.02.2009 DE 102009009988
(43) Veröffentlichungstag der Anmeldung: 28.12.2011
(73) Patentinhaber: Blücher GmbH, 40699 Erkrath (DE)
(72) Erfinder: BÖHRINGER, Bertram, 42115 Wuppertal (DE)
(74) Vertreter: Von Rohr
(86) Internationale Anmeldenummer: PCT/EP2010/000004
(87) Internationale Veröffentlichungsnummer: WO 2010/094368

(56) Entgegenhaltungen:
- EP-A1- 1 818 169
- WO-A2-2004/020089
- DE-U1- 20 318 173

## Beschreibung

Die vorliegende Erfindung betrifft ein textiles Flächenmaterial mit verbesserter mechanischer Stabilität, insbesondere mit Stich- und/oder Schussfestigkeit und mit Schutzfunktion gegenüber chemischen und/oder biologischen Giften, sowie Schutzmaterialien, wie Schutzanzüge, Schutzhandschuhe, Schutzschuhe und Schutzabdeckungen, welche unter Verwendung des textilen Flächenmaterials nach der Erfindung hergestellt sind bzw. welche das textile Flächenmaterial nach der Erfindung aufweisen. Des weiteren betrifft die vorliegende Erfindung die Verwendung des textilen Flächenmaterials nach der Erfindung zur Herstellung von Schutzmaterialien aller Art, insbesondere wie zuvor angeführt.

Im Bereich der Gefahrenabwehr tätige Personen, wie Sicherheitspersonal, Polizisten, Grenzschützer, sowie Soldaten militärischer Verbände, werden im Rahmen ihres Einsatzes, beispielsweise bei Demonstrationen, Unruhen oder militärischen Konfrontationen, oftmals mit einer direkten körperlichen Gewalteinwirkung konfrontiert, wie sie beispielsweise durch den Einsatz von Schuß- bzw. Stichwaffen hervorgerufen sein kann. Vor dem Hintergrund, daß durch den Einsatz von Schuß- bzw. Stichwaffen oftmals schwere Verletzungen der von der Gewalteinwirkung betroffenen Personen resultiert, besteht im Stand der Technik ein großes Bedürfnis, derartige Personen vor mit dem Einsatz von Schuß- bzw. Stichwaffen in Verbindung stehenden Gefahren zu schützen. Auch ist eine hohe Splitterschutzwirkung der entsprechenden Schutzbekleidung von großer Wichtigkeit, insbesondere bei sich im Kampfgebiet bzw. im Kampfeinsatz befindlichen Soldaten.

Im allgemeinen sind Schutzbekleidungsstücke mit schuß- bzw. durchstichfesten Eigenschaften so gestaltet, daß eine Penetration des Körpers eines Trägers der Schutzbekleidung als Folge eines Angriffs mit einer Waffe bzw. eines Angriffs mit einem scharfen bzw. spitzen Gegenstand verhindert werden soll. Dabei ist es erforderlich, daß das entsprechende Schutzbekleidungsstück über entsprechende Einrichtungen bzw. technische Maßnahmen verfügt, welche zu der entsprechenden Schutzfunktion führen, wobei im Stand der Technik oftmals zusätzliche Schichtmaterialien zum Einsatz kommen, welche eine Penetration des Bekleidungsstückes und damit des Körpers eines Trägers der Schutzbekleidung durch Schußeinwirkung oder durch Einwirkung eines (Messer-)Stiches verhindern sollen.

In diesem Zusammenhang ist es im Stand der Technik oftmals nachteilig, daß bei den bekannten Schutzbekleidungsstücken, welche beispielsweise in Form einer Weste oder dergleichen ausgebildet sein können, mitunter Schutzmaterialien mit sehr hohem Flächengewicht und sehr geringer Biegsamkeit zum Einsatz kommen, was den Tragekomfort des Schutzbekleidungsstückes signifikant verringert und eine zusätzliche Belastung für den Träger darstellt. Dies ist jedoch gerade im Rahmen eines Einsatzes, beispielsweise eines militärischen Einsatzes, von großem Nachteil, da der Träger hierdurch in seiner Leistungsfähigkeit und Beweglichkeit eingeschränkt werden kann.

Insbesondere ist es im Stand der Technik bislang nicht im ausreichenden Maße gelungen, Bekleidungsstücke bereitzustellen, welche die Eigenschaften einer hohen Schutzfunktion gegenüber Schußeinwirkung einerseits und gegenüber Sticheinwirkung andererseits in einem Material vereinen. So sind die aus dem Stand der Technik bekannten Schutzbekleidungsstücke nämlich zum einen hinsichtlich ihrer kugelsicheren Wirkweise optimiert, wobei diesbezüglich vorrangig das Eindringen ballistischer Projektile, die von Schußwaffen ausgehen, verhindert werden soll. Derartige Schutzbekleidungsstücke gewährleisten aber nicht immer auch eine hohe Schutzfunktion gegenüber dem Eindringen von spitzen Gegenständen, wie etwa von Messern, Klingen, Meißeln oder dergleichen. Darüber hinaus verhält es sich bei der aus dem Stand der Technik bekannten Schutzbekleidung mit durchstichfesten Eigenschaften oftmals derart, daß eine solche Schutzbekleidung großen Krafteinwirkungen durch ballistische Projektile nicht standhalten kann und somit gerade nicht auch über eine Schutzfunktion gegenüber Schußeinwirkungen verfügt.

Weiterhin ist es im Stand der Technik nachteilig, daß die bekannten Schutzbekleidungsstücke mit erhöhter Stich- bzw. Schußfestigkeit keinerlei Schutzfunktion gegenüber chemischen bzw. biologischen Gift- und Kampfstoffen aufweisen, so daß bei Einsätzen, bei welchen die Gefahr einer Exposition mit toxischen Substanzen, wie beispielsweise mit dem blasenziehenden Lost (synonym als Gelbkreuz bzw. Senfgas bezeichnet) und dem Nervengift Sarin, entweder gar keine Schutzfunktion gegenüber diesen Giftstoffen vorliegt oder aber eine zusätzliche Schutzbekleidung mit diesbezüglicher Optimierung getragen werden muß, was gleichermaßen nachteilig ist.

Die WO 2004/020089 A2 betrifft ein Adsorptionsmaterial, welches ein flächiges Trägermaterial, eine zumindest im Wesentlichen luftdurchlässige und wasserdampfdurchlässige Sperrschicht und eine Adsorptionsschicht aufweist, wobei die Sperrschicht auf dem Trägermaterial aufgebracht ist und gleichzeitig als Haftschicht für die auf der dem Trägermaterial abgewandten Seite der Sperrschicht angeordnete Adsorptionsschicht dient und wobei das Adsorptionsmaterial eine definierte Wasserdampfdurchlässigkeit aufweist.

Weiterhin betrifft die DE 203 18 173 U1 einen atmungsaktiven Schutzhandschuh mit mehrschichtigem Schichtaufbau, welcher eine insbesondere flächige Trägerschicht und eine der Trägerschicht zugeordnete, im Tragezustand der Hand zugewandte, den Durchtritt chemischer Gifte verhindernde oder zumindest verzögernde Sperrschicht aufweist, die eine Adsorptionsschicht auf Basis eines Adsorptionsmaterials umfaßt. Der Schutzhandschuh zeichnet sich dadurch aus, daß die Sperrschicht zusätzlich zu der Adsorptionsschicht eine zumindest im Wesentlichen wasser- und luftundurchlässige Membran aufweist, wobei die Membran zwischen der Trägerschicht und der Adsorptionsschicht angeordnet sein soll.

Schließlich betrifft die EP 1 818 169 A1 einen Handschuh mit einer äußeren Hülle und einem Einsatz, wobei der Einsatz eine erste Schicht, welche eine gasdurchlässige und flüssigkeitsundurchlässige mikroporöse Membran aufweist, und eine zweite Schicht mit Aktivkohle aufweist.

Vor diesem Hintergrund ist die Aufgabe der vorliegenden Erfindung darin zu sehen, ein sich insbesondere zur Herstellung von Schutzbekleidung eignendes Textilmaterial bzw. textiles Flächenmaterial bereitzustellen, welches die zuvor geschilderten Nachteile des Standes der Technik zumindest weitgehend vermeidet oder aber wenigstens abschwächt. Insbesondere sollte sich ein derartiges Textilmaterial zur Herstellung von Schutzbekleidung mit Schutzfunktion gegenüber Stich- und/oder Schußeinwirkung eignen.

Eine weitere Aufgabe der vorliegenden Erfindung liegt darin, ein Textilmaterial bzw. textiles Flächenmaterial bereitzustellen, welches bei gleichzeitig hohem Tragekomfort eine verbesserte mechanische Stabilität und insbesondere eine erhöhte Stich- und/oder Schußfestigkeit aufweist.

Schließlich liegt eine weitere Aufgabe der vorliegenden Erfindung darin, ein Textilmaterial bzw. textiles Flächenmaterial mit erhöhter mechanischer Stabilität bereitzustellen, welches auch eine Schutzfunktion in bezug auf chemische und/oder biologische Gifte bzw. Schadstoffe, insbesondere chemische und/oder biologische Kampfstoffe, aufweist, wobei das Textilmaterial gleichermaßen im Rahmen seiner Verwendung als Schutzbekleidung einen hohen Tragekomfort gewährleisten soll.

Die zuvor geschilderte Aufgabenstellung wird im Rahmen der vorliegenden Erfindung durch ein textiles Flächenmaterial nach Anspruch 1 gelöst. Weitere, vorteilhafte Ausgestaltungen des erfindungsgemäßen textilen Flächenmaterials sind Gegenstand der diesbezüglichen Unteransprüche.

Weiterer Gegenstand der vorliegenden Erfindung sind die erfindungsgemäßen Schutzmaterialien gemäß Anspruch 14, welche beispielsweise in Form von Schutzanzügen, Schutzhandschuhen, Schutzschuhen, Schutzabdeckungen und dergleichen vorliegen können und welche unter Verwendung des textilen Flächenmaterials nach der Erfindung hergestellt sind bzw. welche das erfindungsgemäße textile Flächenmaterial aufweisen.

Schließlich ist ein weiterer Gegenstand der vorliegenden Erfindung die Verwendung des textilen Flächenmaterials gemäß Anspruch 15 zur Herstellung von Schutzmaterialien aller Art.

Die Anmelderin hat nun überraschenderweise herausgefunden, daß die zuvor geschilderte Aufgabe dadurch gelöst werden kann, daß ein textiles Flächenmaterial nach der Erfindung bereitgestellt wird, welches einen mehrschichtigen Aufbau mit mindestens einer stich- und/oder schußfesten Schicht und mindestens einer Adsorptionsschicht auf Basis diskreter Adsorbenspartikel aufweist. In völlig überraschender Weise konnte die Anmelderin zeigen, daß ein derartiges textiles Flächenmaterial nach der Erfindung über verbesserte Schutzeigenschaften gegenüber Stich- bzw. Schußeinwirkungen aufweist, wobei das textile Flächenmaterial nach der Erfindung gleichermaßen einen hervorragenden ABC-Schutz und somit eine Schutzfunktion gegenüber chemischen bzw. biologischen Giften aufweist. Zudem zeichnet sich das textile Flächenmaterial dadurch aus, daß unter dessen Verwendung hergestellte Schutzmaterialien bzw. Schutzbekleidungen einen hervorragenden Tragekomfort aufweisen, da das erfindungsgemäße textile Flächenmaterial zum einen eine hohe Atmungsaktivität bzw. Luftdurchlässigkeit und zum anderen eine hohe Biegsamkeit bei gleichzeitig geringem Flächengewicht aufweist. Zudem resultiert im Rahmen der vorliegenden Erfindung ein Material mit hervorragenden Splitterschutzeigenschaften.

Es versteht sich von selbst, daß Ausgestaltungen, Ausführungsformen, Vorteile und dergleichen, welche nachfolgend zu Zwecken der Vermeidung von Wiederholungen nur zu einem Erfindungsaspekt ausgeführt sind, selbstverständlich auch in bezug auf die übrigen Erfindungsaspekte entsprechend gelten.

Gegenstand der vorliegenden Erfindung - gemäß einem **ersten** Aspekt der vorliegenden Erfindung - ist somit ein textiles Flächenmaterial mit Stich- und/oder Schußfestigkeit (d. h. mit Schutzfunktion gegenüber Stich- bzw. Schußeinwirkung) und mit Schutzfunktion gegenüber chemischen und/oder biologischen Giften, insbesondere Kampfstoffen, wobei das textile Flächenmaterial nach der Erfindung einen mehrschichtigen Schichtaufbau aufweist, wobei der Schichtaufbau
- mindestens eine stich- und/oder schußfeste Schicht, wobei die stich- und/oder schußfeste Schicht ein Gewebe ist und ein Flächengewicht von 0,5 kg/m² bis 8 kg/m² aufweist und wobei die stich- und/oder schußfeste Schicht Fasern und/oder Garne auf Basis von Aramiden enthält oder hieraus besteht, wobei die Fasern und/oder Garne einen Fasertiter von 50 bis 5.000 Denier aufweisen,
und
- mindestens eine Adsorptionsschicht auf Basis diskreter Adsorbenspartikel, wobei die Adsorbenspartikel der Adsorptionsschicht auf Basis von Aktivkohle in Form von Aktivkohleteilchen ausgebildet sind, aufweist, wobei das textile Flächenmaterial eine Stichfestigkeit von mehr als 10 Newton, gemäß DIN EN 388:2003, und eine Reißfestigkeit von mehr als 10 Newton, gemäß DIN EN 388:2003, aufweist.

Die grundlegende Idee der vorliegenden Erfindung ist somit darin zu sehen, daß ein textiles Flächenmaterial mit mehrschichtigem Schichtaufbau bereitgestellt wird, wobei der Schichtaufbau in spezieller erfindungsgemäßer Art und Weise neben mindestens einer stich- bzw. schußfesten Schicht zusätzlich noch mit mindestens einer Adsorptionsschicht auf Basis diskreter Adsorbenspartikel ausgerüstet ist. Denn die Anmelderin hat überraschend herausgefunden, daß durch die gezielte Kombination von stich- und/oder schußfesten Schichten einerseits mit einer speziellen Adsorptionsschicht auf Basis diskreter Adsorbenspartikel andererseits eine signifikante Verbesserung der Schutzfunktion gegenüber Stich- bzw. Schußeinwirkungen erreicht wird. In diesem Zusammenhang wird erfindungsgemäß ein textiles Flächenmaterial bereitgestellt, welches einerseits eine hohe Schußfestigkeit, d. h. Schutzfunktion gegenüber einer Einwirkung bzw. Penetration ballistischer Projektile insbesondere aus Schußwaffen, und andererseits eine Schutzfunktion gegenüber Sticheinwirkung, d. h. eine Schutzfunktion gegenüber dem Eindringen spitzer Gegenstände, wie eines Messers oder dergleichen, vereint.

Ohne sich auf diese Theorie beschränken zu wollen, führt die Gegenwart der zusätzlichen Adsorptionsschicht auf Basis diskreter Adsorbenspartikel zu einer Verstärkung der Stabilität der stich- und/oder schußfesten Schicht, was insbesondere auch durch die Eigenhärte der Adsorbentien sowie durch die gezielte Wechselwirkung der Adsorptionsschicht mit der stich- und/oder schußfesten Schicht resultiert, beispielsweise wenn die Adsorptionsschicht der stich- und/oder schußfesten Schicht zugeordnet bzw. hieran fixiert ist. In völlig überraschender Weise verstärken sich die stich- und/oder schußfeste Schicht und die Adsorptionsschicht hinsichtlich der Schutzfunktion gegenüber Stich- bzw. Schußeinwirkung in synergistischer Art und Weise, d. h. über die Summe der Einzelwirkungen hinaus.

Im Rahmen der vorliegenden Erfindung ist es zudem völlig überraschend, daß durch die gezielte Kombination von mindestens einer stich- und/oder schußfesten Schicht einerseits und mindestens einer speziellen Adsorptionsschicht auf Basis diskreter Adsorbenspartikel andererseits sowohl die Stichfestigkeit als auch die Schutzfunktion gegenüber Schußeinwirkungen erhöht ist, so daß das erfindungsgemäße textile Flächenmaterial die beiden vorgenannten Funktionen in einem Material vereint. Das textile Flächenmaterial nach der Erfindung kann daher gewissermaßen universell für viele Gefahrenbereiche eingesetzt werden, zumal das textile Flächenmaterial nach der Erfindung - wie nachfolgend angeführt - zusätzlich eine Schutzfunktion gegenüber chemischen bzw. biologischen Giften bei gleichzeitig gutem Splitterschutz aufweist.

Im Rahmen der vorliegenden Erfindung ist es nämlich gleichermaßen gewährleistet, daß das textile Flächenmaterial nach der Erfindung - bedingt durch die Anwesenheit von Adsorbentien - zusätzlich über eine Schutzfunktion gegenüber chemischen und/oder biologischen Giften verfügt, so daß das textile Flächenmaterial nach der Erfindung insbesondere auch für den militärischen Einsatz geeignet ist, zumal die mit dem erfindungsgemäßen textilen Flächenmaterial hergestellte Schutzbekleidung über einen außerordentlich hohen Tragekomfort verfügt, da das textile Flächenmaterial nach der Erfindung eine hohe Atmungsaktivität bzw. Luftdurchlässigkeit und gleichermaßen eine hohe Biegsamkeit bei geringem Flächengewicht aufweist.

Weiterhin hat das Vorhandensein einer Adsorptionsschicht den Vorteil, daß die Adsorptionsschicht bei Einwirkung von Feuchtigkeit (z. B. bei der Verarbeitung des erfindungsgemäßen textilen Flächenmaterials zu Schutzbekleidung und deren Verwendung beispielsweise bei feuchter Witterung, insbesondere Regen etc., oder aber Feuchtigkeit durch Körperschweiß unter körperlicher Anstrengung bei Tragen der Schutzbekleidung unter Einsatzbedingungen) die Feuchtigkeit in großen Mengen reversibel aufnehmen und sozusagen "zwischenzuspeichem" bzw. "abzupuffern" (und nachfolgend allmählich in geringen Mengen und kontinuierlich wieder abzugeben) imstande ist und somit in effizienter Weise verhindert, daß die Feuchtigkeit mit der stich- und/oder schußfesten Schicht in Kontakt kommt und deren Schutzwirkung reduziert (Üblicherweise wird durch Feuchtigkeitseinwirkung die Stich- bzw. Schußfestigkeit von stich- bzw. schußfesten Materialien erheblich reduziert wird.); auf diese Weise kann die Stich- bzw. Schußfestigkeit des textilen Flächenmaterials nach der vorliegenden Erfindung durch die Anwesenheit der Adsorptionsschicht in effizienter Weise aufrechterhalten werden.

Der Begriff "Stichfestigkeit" bzw. "stichfest", wie er im Rahmen der vorliegenden Erfindung zu verstehen ist, bezieht sich insbesondere auf eine Schutzfunktion gegenüber dem Ein- bzw. Durchdringen eines spitzen Gegenstandes, beispielsweise eines Messer, einer Klinge, eines Meißels oder dergleichen, durch das erfindungsgemäße textile Flächenmaterial. Das textile Flächenmaterial nach der Erfindung weist somit eine hohe Durchstichfestigkeit bzw. einen hohen Schutz gegenüber einer Stichpenetration durch die zuvor genannten spitzen Gegenstände auf.

Weiterhin wird unter dem Begriff "Schußfestigkeit" bzw. "schußfest" im Rahmen der vorliegenden Erfindung eine Schutzfunktion hinsichtlich der Penetration von Geschossen bzw. ballistischen Projektilen verstanden, welche insbesondere aus Schußwaffen oder dergleichen stammen und welche mit hohen Geschwindigkeiten auf das erfindungsgemäße textile Flächenmaterial auftreffen. Mit anderen Worten handelt es sich hierbei um sogenannte kugelsichere Eigenschaften.

Was den Aufbau bzw. die Anordnung der Schichten bzw. Lagen in dem erfindungsgemäßen textilen Flächenmaterial anbelangt, so kann es im Rahmen der vorliegenden Erfindung vorgesehen sein, daß die Adsorbenspartikel der Adsorptionsschicht bzw. die Adsorptionsschicht als solche an der stich- und/oder schußfesten Schicht befestigt sind. In diesem Fall kann die stich- und/oder schußfeste Schicht als Träger für die Adsorbenspartikel der Adsorptionsschicht dienen. Mit anderen Worten sind gemäß dieser erfindungsgemäßen Ausführungsform die Adsorbenspartikel der Adsorptionsschicht mit der stich- bzw. schußfesten Schicht verbunden bzw. die stich- und/oder schußfeste Schicht ist mit den Adsorbenspartikeln der Adsorptionsschicht beaufschlagt, beispielsweise durch Verklebung, insbesondere wie nachfolgend noch angeführt. Auf diese Weise kann eine direkte Stabilisierung der stich- und/oder schußfesten Schicht durch die Adsorbenspartikel realisiert werden, was zu außerordentlich guten Ergebnissen hinsichtlich der Stich- und Schußfestigkeit aufgrund der zuvor beschriebenen Stabilisierung der stich- und/oder schutzfesten Schicht führt.

Gemäß einer alternativen Ausführungsform kann es im Rahmen der vorliegenden Erfindung auch vorgesehen sein, daß das textile Flächenmaterial nach der Erfindung eine vorzugsweise zwischen der stich- und/oder schußfesten Schicht und der Adsorptionsschicht angeordnete Trägerschicht aufweist, wobei die Adsorbenspartikel der Adsorptionsschicht an der Trägerschicht befestigt sind. In diesem Zusammenhang kann die Trägerschicht somit als Träger für die Adsorbenspartikel der Adsorptionsschicht dienen. Auch in diesem Falle resultieren durch das Vorhandensein der diskreten Adsorbenspartikel sehr gute Stichschutz- und Schußfestigkeitseigenschaften.

Gemäß dieser Ausführungsform kann es demnach vorgesehen sein, daß die Trägerschicht an der stich- und/oder schußfesten Schicht befestigt ist und/oder daß die Adsorbenspartikel der Adsorptionsschicht an der Trägerschicht auf der der stich- und/oder schußfesten Schicht abgewandten Seite der Trägerschicht befestigt sind. Mit anderen Worten kann es erfindungsgemäß vorgesehen sein, daß die zusätzliche Trägerschicht gewissermaßen zwischen der stich- und/oder schußfesten Schicht einerseits und der Adsorptionsschicht angeordnet ist, wobei die Trägerschicht mit der schußfesten Schicht und/oder mit der Adsorptionsschicht verbunden, insbesondere verklebt (beispielsweise punktförmig verklebt), sein kann. In diesem Fall resultiert somit eine Schichtabfolge a) stich- und/oder schußfeste Schicht, b) Trägerschicht und c) Adsorptionsschicht.

Gleichermaßen ist aber auch ein Schichtaufbau im Rahmen der vorliegenden Erfindung realisierbar, wonach die Adsorptionsschicht der stich- und/oder schußfesten Schicht zugeordnet ist und auf der der stich- und/oder schußfesten Schicht abgewandten Seite der Adsorptionsschicht mit der Trägerschicht versehen ist. Gemäß dieser Ausführungsform ergibt sich eine Schichtabfolge a) stich- und/oder schußfeste Schicht, b) Adsorptionsschicht und c) zusätzliche Trägerschicht.

Erfindungsgemäß ist es somit möglich, daß die Adsorbenspartikel der Adsorptionsschicht zwischen der Trägerschicht und der stich- und/oder schußfesten Schicht angeordnet sind, insbesondere wobei die Adsorbenspartikel an der Trägerschicht auf der der stich- und/oder schußfesten Schicht zugewandten Seite der Trägerschicht befestigt sind und/oder insbesondere wobei die Adsorbenspartikel der Adsorptionsschicht zusätzlich an der stich- und/oder schußfesten Schicht an der der Trägerschicht zugewandten Seite der stich- und/oder schußfesten Schicht befestigt sind.

Die Trägerschicht dient insbesondere der weiteren Stabilisierung des Schichtverbundes und im besonderen der Adsorptionsschicht, wobei zudem die Biegsamkeit des Gesamtverbundes weiter erhöht werden kann.

Die Adsorbenspartikel der Adsorptionsschicht können im Rahmen der vorliegenden Erfindung vorzugsweise mittels eines diskontinuierlich, insbesondere punktförmig aufgetragenen Klebstoffes an der stich- und/oder schußfesten Schicht und/oder an der Trägerschicht fixiert sein. Diesbezüglich kann ein dem Fachmann an sich geläufiger Klebstoff verwendet werden, beispielsweise ein thermoplastischer Klebstoff und/oder reaktiver Klebstoff, beispielsweise auf Polyurethanbasis.

Der Begriff "punktförmig", wie er im Rahmen der vorliegenden Erfindung zu verstehen ist, bezieht sich auf eine nichtzusammenhängende Auftragung des Klebstoffes, beispielsweise im Rahmen eines punktförmigen Rasters. Denn in völlig überraschender Weise führt bereits eine lediglich punktförmige Fixierung der Adsorbentien zu einer zusätzlichen Stabilisierung der stich- und/oder schußfesten Schicht. Zudem führt die diskontinuierliche Verklebung zu einem verbesserten Tragekomfort der aus dem textilen Flächenmaterial nach der Erfindung hergestellten Schutzmaterialien, insbesondere da die Atmungsaktivität bzw. der Luftaustausch sowie die Biegsamkeit des Materials verbessert sind. Im Rahmen der vorliegenden Erfindung ist es jedoch auch möglich, daß - auch wenn dies nicht bevorzugt ist - ein kontinuierlicher Klebstoffauftrag zur Fixierung der Adsorbentien realisiert ist.

Im Rahmen der vorliegenden Erfindung ist es von Vorteil, wenn die Adsorbenspartikel der Adsorptionsschicht zu mindestens 50 %, insbesondere zu mindestens 60 %, vorzugsweise zu mindestens 70 %, für die zu adsorbierenden chemischen und/oder biologischen Gifte frei zugänglich sind. Dies geschieht dadurch, daß die Menge und die Art, insbesondere die Viskosität, des Klebstoffes derart ausgelegt sind, daß die Adsorbenspartikel der Adsorptionsschicht nicht vollständig in den Klebstoff eingedrückt werden bzw. einsinken.

Der Klebstoff sollte in einer Menge von 1 bis 200 g/m², insbesondere 5 bis 150 g/m², vorzugsweise 10 bis 120 g/m², bevorzugt 20 bis 100 g/m², besonders bevorzugt 25 bis 80 g/m², ganz besonders bevorzugt 30 bis 75 g/m², aufgetragen sein.

Was die Bedeckung mit den Adsorbentien anbelangt, so können erfindungsgemäß besonders gute Ergebnisse erhalten werden, wenn mindestens 50 %, insbesondere mindestens 60 %, vorzugsweise mindestens 70 %, besonders bevorzugt mindestens 75 %, ganz besonders bevorzugt mindestens 80 %, der mit den Adsorbenspartikeln der Adsorptionsschicht beaufschlagten Seite der stich- und/oder schußfesten Schicht und/oder der Trägerschicht mit den Adsorbenspartikeln beaufschlagt ist. Denn hierdurch ist eine besonders gute Stabilisierung der stich- und/oder schußfesten Schicht möglich, wobei gleichermaßen gewährleistet ist, daß das textile Flächenmaterial nach der Erfindung als solches biegsam ist und auch eine gute Luftdurchlässigkeit aufweist. Im Rahmen der vorliegenden Erfindung sollte der Klebstoffauftrag den obengenannten Deckungsgraden angepaßt sein.

Was die Adsorbenspartikel als solche anbelangt, so ist es erfindungsgemäß vorgesehen, daß die Adsorptionsschicht chemische und/oder biologische Gifte adsorbierende Adsorbenspartikel umfaßt. Die Adsorbenspartikel der Adsorptionsschicht sind auf Basis von Aktivkohle in Form von Aktivkohleteilchen ausgebildet.

In diesem Zusammenhang ist es besonders vorteilhaft, wenn die Adsorbenspartikel der Adsorptionsschicht in Form diskreter Aktivkohleteilchen in Kornform ("Kornkohle") oder Kugelform ("Kugelkohle") ausgebildet sind oder diese umfassen.

Was die Adsorbenspartikel weiterhin anbelangt, so kann es im Rahmen der vorliegenden Erfindung vorgesehen sein, daß die Adsorbenspartikel der Adsorptionsschicht einen mittleren Durchmesser von < 1,0 mm, insbesondere < 0,5 mm, vorzugsweise < 0,4 mm, bevorzugt < 0,35 mm, besonders bevorzugt < 0,3 mm, aufweisen und/oder daß der mittlere Durchmesser der Adsorbenspartikel mindestens 0,1 mm beträgt. Bei den Angaben bezüglich der mittleren Durchmesser handelt es sich um den sogenannten D₅₀-Wert, welcher beispielsweise und in nichtbeschränkender Weise durch Laserbeugung oder Siebanalyse ermittelt werden kann, was dem Fachmann wohlbekannt ist.

Die Adsorbenspartikel der Adsorptionsschicht können in einer Menge von 5 bis 500 g/m², insbesondere 10 bis 450 g/m², vorzugsweise 20 bis 400 g/m², bevorzugt 25 bis 350 g/m², besonders bevorzugt 50 bis 325 g/m², ganz besonders bevorzugt 50 bis 300 g/m², auf der stich- und/oder schußfesten Schicht und/oder auf der Trägerschicht aufgebracht sein.

Weiterhin können die Adsorbenspartikel der Adsorptionsschicht eine innere Oberfläche (BET) von mindestens 800 m²/g, insbesondere von mindestens 900 m²/g, vorzugsweise von mindestens 1.000 m²/g, bevorzugt im Bereich von 800 bis 1.500 m²/g, aufweisen.

Die Adsorbenspartikel der Adsorptionsschicht sollten weiterhin einen Berstdruck je einzelnem Adsorptionspartikel von mindestens 5 Newton, insbesondere mindestens 10 Newton, und/oder von vorzugsweise mindestens 15 Newton, oder bis zu 20 Newton aufweisen. Ein hoher Berstdruck der Adsorptionspartikel ist vor dem Hintergrund der Stabilisierung des textilen Flächenmaterials bzw. der stich- und/oder schußfesten Schicht von großer Bedeutung. So führen die erfindungsgemäß vorgesehenen hohen Berstdrucke zu einer signifikanten Verbesserung der Schutzfunktion gegenüber einer Stich- und/oder Schußeinwirkung.

Insbesondere vor dem Hintergrund der Verbesserung der Schutzfunktion gegenüber chemischen und/oder biologischen Giften bzw. Kampfstoffen kann es vorgesehen sein, daß die Adsorbenspartikel der Adsorptionsschicht außerdem mit mindestens einem Katalysator imprägniert sind. Die Gegenwart eines Katalysators führt dazu, daß adsorbierte toxische Substanzen zumindest teilweise katalytisch abgebaut und somit unschädlich gemacht werden. Auf diese Weise wird zudem einer Erschöpfung der Adsorptionsschicht wirksam entgegengewirkt, was insbesondere bei hoher Kontamination mit toxischen Substanzen von Bedeutung ist. In diesem Zusammenhang können als Katalysator Enzyme und/oder Metallionen, vorzugsweise Kupfer-, Silber-, Cadmium-, Platin-, Palladium-, Zink- und/oder Quecksilberionen, Verwendung finden. Zudem kann die Menge an Katalysator 0,05 bis 12 Gew.-%, vorzugsweise 1 bis 10 Gew.-%, besonders bevorzugt 2 bis 8 Gew.-%, bezogen auf das Gewicht der Adsorbenspartikel, betragen.

Was die stich- und/oder schußfeste Schicht des erfindungsgemäßen textilen Flächenmaterials anbelangt, so ist diese ein Gewebe. Erfindungsgemäß vorgesehen ist eine Ausbildung in Form eines Gewebes, da ein Gewebe als solches hervorragende Stabilitätseigenschaften insbesondere im Hinblick auf die Gewährleistung eines Stichschutzes sowie einer Schutzfunktion gegenüber Schußeinwirkung aufweist.

Was die stich- und/oder schußfeste Schicht bzw. das Gewebe für die stich- und/oder schußfeste(n) Schicht(en) weiterhin anbelangt, so sollte diese bzw. dieses einen hohen Deckfaktor aufweisen. In diesem Zusammenhang sollte die stich- und/oder schußfeste Schicht bzw. das Gewebe einen Deckfaktor von 0,6 bis 0,99, insbesondere 0,65 bis 0,98, vorzugsweise von 0,7 bis 0,95, aufweisen. Der Deckfaktor ist ein errechneter Wert, der sich auf die Geometrie der Bindung in der stich- und/oder schußfesten Schicht bzw. in dem Gewebe bezieht und den Prozentsatz der Gesamtoberfläche der Schicht bzw. des Gewebes angibt, die durch Garne bzw. Fasern bedeckt ist. Für weitere Einzelheiten kann auf die diesbezügliche Fachliteratur, insbesondere auf "Weaving: Conversation of yarns to fabric", Lord and Mohammed, veröffentlicht von Merrow, 1982, Seiten 141 bis 143, verwiesen werden.

Besonders gute Ergebnisse hinsichtlich der Gewährleistung einer Schutzfunktion gegenüber Stich- und/oder Schusseinwirkung werden erfindungsgemäß erreicht, da die stich- und/oder schußfeste Schicht Fasern und/oder Garne auf Basis von Aramiden (z. B. Kevlar^{®} von der Fa. DuPont oder Twaron^{®} von der Fa. Twaron-Products bzw. Teijin) enthält oder hieraus besteht. In diesem Zusammenhang kann das Aramid insbesondere ausgewählt sein aus der Gruppe von para-Aramiden sowie deren Copolymeren und Mischungen. Derartige Substanzen bzw. Fasern oder Garne der vorgenannten Art sind dem Fachmann als solche wohlbekannt und handelsüblich verfügbar. Insbesondere kommt der Einsatz von Poly(p-phenylterephthalamid) oder Poly(m-phenylenterephthalamid) in Betracht.

Zu der Stoffgruppe der Aramide, welche synonym auch als aromatische Polyamide bzw. Polyaramide bezeichnet werden, werden im allgemeinen langkettige synthetische Polyamide gezählt, bei denen mindestens 85 % der Aramidgruppen direkt an zwei aromatischen Ringen gebunden sind.

Aramidfasern zeichnen sich durch eine sehr hohe Festigkeit, hohe Schlagfestigkeit, hohe Bruchdehnung, gute Schwingungsdämpfung sowie durch eine hohe Beständigkeit gegenüber Säuren und Laugen aus. Darüber hinaus sind Aramidfasern bzw. -game äußerst hitze- und feuerbeständig. Erfindungsgemäß ist der Einsatz von para-Aramiden bzw. para-Aramidfasern bevorzugt, gleichermaßen kommt aber auch der Einsatz von meta-Aramiden bzw. meta-Aramidfasern in Betracht. In bezug auf para-Aramide kann beispielsweise der Einsatz von Fasern bzw. Garnen vom Typ Kevlar^{®} sowie vom Typ Twaron^{®} und in bezug auf meta-Aramide von Fasern bzw. Garnen vom Typ Nomex^{®} sowie Teijinconex^{®} in Betracht kommen. Derartige Fasern sind dem Fachmann wohlbekannt, und der Fachmann ist jederzeit in der Lage, die im Rahmen der vorliegenden Erfindung geeigneten Fasern bzw. Garne für die stich- und/oder schußfeste Schicht auszuwählen.

Zu weiteren Ausführungen zu Aramiden kann verwiesen werden auf Römpp Chemielexikon, 10. Auflage, Band 1, 1996, Georg Thieme Verlag Stuttgart/New York, Stichwort "Aramide", Seite 245, sowie auf die dort in bezug genommenen Literaturangaben, welche hiermit vollumfänglich durch Bezugnahme eingeschlossen sind.

Weiterhin kann es vorteilhaft sein, die vorgenannten Garne bzw. Fasern mit Stich- bzw. Schußfestigkeitseigenschaften (z. B. para-Aramide) und solche mit Hitze- bzw. Feuerbeständigkeit (z. B. meta-Aramide) miteinander zu kombinieren. Auf diese Weise resultiert eine Schicht und somit ein textiles Flächenmaterial insgesamt, welche bzw. welches einerseits über Stich- bzw. Schußfestigkeitseigenschaften und andererseits über Hitze- bzw. Feuerbeständigkeitseigenschaften (Flammbeständigkeitseigenschaften) verfügt. Daher kann das erfindungsgemäße Flächenmaterial gemäß einer besonderen Ausführungsform der vorliegenden Erfindung zusätzlich auch hitze- und/oder feuerbeständige (flammbeständige) Fasern und/oder Garne enthalten; diese können Bestandteil der stich- und/oder schutzfesten Schicht sein bzw. hierin enthalten sein und/oder eine separate Schicht ausbilden.

Hinsichtlich der im Rahmen der vorliegenden Erfindung geeigneten Fasern bzw. Garne für die Ausbildung der stich- bzw. schutzfesten Schicht bzw. Lage ist es vorteilhaft, wenn die Fasern und/oder Garne einen Fasertiter von 50 bis 5.000 Denier, insbesondere 60 bis 4.000 Denier, vorzugsweise 70 bis 3.000 Denier, aufweisen. Die Fasern und/oder Garne sollten eine Festigkeit von mindestens 10 g/Denier (gpd), insbesondere mindestens 20 g/Denier, vorzugsweise mindestens 30 g/Denier, aufweisen. Zudem sollten die Fasern und/oder Garne eine Reißdehnung von mindestens 1,5 %, insbesondere mindestens 1,8 %, vorzugsweise mindestens 2,0 %, bevorzugt mindestens 2,2 %, ganz besonders bevorzugt mindestens 2,4 %, aufweisen.

Beispielsweise können Fasern und/oder Garne bzw. Gewebe für die stich- und/oder schußfeste(n) Schicht(en) eingesetzt werden, wie sie in der WO 93/11290 A1 oder der WO 2005/049903 A2 beschrieben sind, deren jeweiliger Offenbarungsgehalt hiermit durch Bezugnahme vollumfänglich eingeschlossen ist.

Die stich- und/oder schußfeste(n) Schicht(en) können insgesamt ein Flächengewicht von 0,5 kg/m² bis 8 kg/m², vorzugsweise 0,75 kg/m² bis 6 kg/m², bevorzugt 1 kg/m² bis 4 kg/m², aufweisen.

Was die Ausbildung der stich- und/oder schußfesten Schicht(en) anbelangt, so kann diese bzw. können diese in Form eines Gewebes mit 1 Million bis 20 Million Faserüberkreuzungspunkte/cm², insbesondere 2 Million bis 17 Million Faserüberkreuzungspunkte/cm², vorzugsweise 3 bis 15 Million Faserüberkreuzungspunkte/cm², ausgebildet sein. Durch die spezielle Ausbildung des Gewebes mit einer hohen Anzahl an Faserüberkreuzungspunkten kann - ohne sich auf diese Theorie beschränken zu wollen - die Stabilität der stich- und/oder schußfesten Schicht weiter erhöht werden, da sich die Fasern bzw. Garne gewissermaßen ineinander verzahnen und somit das Gewebe weiter stabilisieren.

Im Rahmen der vorliegenden Erfindung kann es vorgesehen sein, daß das textile Flächenmaterial eine Vielzahl, insbesondere mindestens zwei stich- und/oder schußfeste Schichten aufweist, insbesondere wobei die einzelnen Schichten einander zugeordnet, insbesondere miteinander verbunden, sind, insbesondere wobei die einzelnen Schichten einen Verbund ausbilden. Die stich- und/oder schußfesten Schichten können beispielsweise miteinander verklebt sein, vorzugsweise durch einen insbesondere punktförmig aufgetragenen Klebstoff. Gleichermaßen kommt ein Vernähen, ein Verheften oder ein Verklammern der jeweiligen Schichten bzw. eine Kombination der vorgenannten Maßnahmen in Betracht. Auch ein loser Verbund z. B. mit einer nur randseitigen Befestigung der stich- und/oder schußfesten Schichten ist möglich.

In diesem Zusammenhang kann es vorgesehen sein, daß die jeweiligen stich- und/oder schußfesten Schichten zueinander identisch oder verschieden ausgebildet sind. So können beispielsweise und in nichtbeschränkender Weise die jeweiligen stich- und/oder schußfesten Schichten unterschiedliche Flächengewichte und/oder jeweils voneinander verschiedene Fasern bzw. Garne aufweisen. In diesem Zusammenhang kann es beispielsweise vorgesehen sein, daß bei Vorhandensein mehrerer stich- und/oder schußfester Schichten der eine Teil der Schichten im Hinblick auf verbesserte Stichschutzeigenschaften und der andere Teil der stich- und/oder schußfesten Schichten im Hinblick auf verbesserte Schutzeigenschaften gegenüber Schußpenetration optimiert sind.

Was die Anordnung der Schichten in dem erfindungsgemäßen textilen Flächenmaterial anbelangt, so sollte die stich- und/oder schußfeste Schicht im Gebrauchszustand des textilen Flächenmaterials außenseitig angeordnet sein. Die Adsorptionsschicht sollte im Gebrauchszustand des textilen Flächenmaterials innenseitig angeordnet sein. Der Begriff "außenseitig" ist so zu verstehen, daß die diesbezügliche Schicht im Tragezustand vom Körper eines Trägers bzw. Benutzers des textilen Flächenmaterials abgewandt ist, während der Begriff "innenseitig" so zu verstehen ist, daß die entsprechende Schicht bzw. Lage im Trage- bzw. Gebrauchszustand des textilen Flächenmaterials nach der Erfindung dem Körper des Trägers bzw. des Benutzers zugewandt ist.

Gemäß einer weiteren Ausführungsform der vorliegenden Erfindung kann es vorgesehen sein, daß das textile Flächenmaterial zusätzlich eine erste Abdeckschicht aufweist. Die erste Abdeckschicht kann auf der der Adsorptionsschicht abgewandten Seite der stich- und/oder schußfesten Schicht angeordnet sein. Die erste Abdeckschicht kann im Gebrauchszustand des textilen Flächenmaterials außenseitig angeordnet sein.

Die erste Abdeckschicht kann als ein Textilmaterial, vorzugsweise ein luftdurchlässiges Textilmaterial, insbesondere als ein textiles Flächengebilde, ausgebildet sein. In diesem Zusammenhang kann die erste Abdeckschicht ein Gewebe, Gewirke, Gestricke, Gelege oder ein Textilverbundstoff, vorzugsweise ein Gewebe, sein. Die erste Abdeckschicht dient insbesondere zur äußeren Abdeckung des textilen Flächenmaterials und stellt somit gewissermaßen eine erste bzw. äußere Schutzschicht dar, welche beispielsweise die darunterliegenden Schichten bzw. Lagen vor Verschmutzungen schützt. Die erste Abdeckschicht kann zudem mit einer Tamfärbung oder dergleichen versehen sein.

Die erste Abdeckschicht kann gleichermaßen oleophobiert und/oder hydrophobiert sein, insbesondere durch eine spezielle Imprägnierung. Hierdurch kann insbesondere die Schutzfunktion gegenüber chemischen bzw. biologischen Giften weiter verbessert werden, da auf das textile Flächenmaterial nach der Erfindung insbesondere in Form großer Tropfen auftreffende Gifte bereits nicht in bzw. durch die erste Abdeckschicht eindringen können bzw. der Durchtritt von Giftstoffen zumindest verzögert bzw. vermindert wird.

Die erste Abdeckschicht kann ein Flächengewicht von 50 bis 300 g/m², insbesondere 75 bis 250 g/m², vorzugsweise 90 bis 175 g/m², aufweisen. Die erste Abdeckschicht kann zudem als ein luftdurchlässiges, 75 bis 250 g/m², vorzugsweise 90 bis 175 g/m², schweres textiles Flächengebilde, welches oleophob und/oder hydrophob ausgerüstet sein kann, ausgebildet sein. Im Rahmen der vorliegenden Erfindung ist es gleichermaßen möglich, daß - insbesondere für den Fall, daß keine erste Abdeckschicht vorgesehen ist - die außenseitig angeordnete stich- und/oder schußfeste Schicht mit einer oleophoben und/oder hydrophoben Ausrüstung versehen ist.

Zudem ist es im Rahmen der vorliegenden Erfindung möglich, daß das textile Flächenmaterial nach der Erfindung zusätzlich eine zweite Abdeckschicht aufweist, insbesondere wobei die zweite Abdeckschicht auf der der stich- und/oder schußfesten Schicht abgewandten Seite der Adsorptionsschicht angeordnet ist und/oder insbesondere wobei die zweite Abdeckschicht im Gebrauchszustand des textilen Flächenmaterials innenseitig angeordnet ist. Die zweite Abdeckschicht bildet somit gewissermaßen in bezug auf den Trage- bzw. Gebrauchszustand des erfindungsgemäßen textilen Flächenmaterials, beispielsweise in Form eines Schutzanzuges, die innenseitig angeordnete und zum Körper eines Trägers bzw. Benutzers gewandte innere Abschlußschicht dar. Gemäß den obigen Ausführungen kann es vorgesehen sein, daß zwischen der Adsorptionsschicht und der zweiten Abdeckschicht die zuvor beschriebene zusätzliche Trägerschicht angeordnet ist.

Die zweite Abdeckschicht kann als ein Textilmaterial, vorzugsweise ein luftdurchlässiges Textilmaterial, insbesondere ein textiles Flächengebilde, ausgebildet sein. Die zweite Abdeckschicht kann ein Gewebe, Gewirke, Gestricke, Gelege oder ein Textilverbundstoff, insbesondere ein Vlies, vorzugsweise ein Polyamid/Polyester-Vlies, sein. Die zweite Abdeckschicht kann abriebfest ausgebildet und/oder aus einem abriebfesten Textilmaterial gebildet sein.

Die zweite Abdeckschicht kann ein Flächengewicht von 5 bis 150 g / m², insbesondere 10 bis 125 g/m², vorzugsweise 40 bis 100 g/m², aufweisen.

Die Anwesenheit der zweiten Abdeckschicht bzw. des inneren Abdeckmaterials hat insbesondere den Vorteil, daß im Trage- bzw. Benutzungszustand ein unmittelbarer Kontakt der Haut mit der Adsorptionsschicht vermieden wird. Hierdurch wird einerseits bewirkt, daß die Adsorptionsschicht nicht durch Hautschweiß verunreinigt wird, und zum anderen wird ein höherer Tragekomfort erzielt, weil die zweite Abdeckschicht im Rahmen des erfindungsgemäßen Schichtaufbaus die Funktion einer inneren Abdeckschicht einnimmt, welche ein angenehmes Tragegefühl bewirkt. Zudem verhindert die Abdeckschicht eine übermäßige mechanische Belastung des Adsorptionsmaterials der Adsorptionsschicht.

Was die erste und zweite Abdeckschicht anbelangt, so können diese dem textilen Flächenmaterial im Sinne eines losen Verbundes zugeordnet sein. Gleichermaßen ist auch eine Befestigung der jeweiligen Schichten möglich, beispielsweise mittels eines vorzugsweise punktförmig verklebten Klebstoffes oder eines Klebstoffwebs, oder aber mittels Vernähen, Verheften, Verkleben oder dergleichen bzw. Kombinationen der vorgenannten Maßnahmen.

Erfindungsgemäß kann es zudem vorgesehen sein, daß das textile Flächenmaterial zusätzlich eine zumindest im wesentlichen wasser- und luftundurchlässige, aber wasserdampfdurchlässige, den Durchtritt chemischer und/oder biologischer Gifte verzögernde oder gegenüber chemischen und/oder biologischen Giften zumindest im wesentlichen undurchlässige Membran aufweist, insbesondere wobei die Membran zwischen der stich- und/oder schußfesten Schicht und der Adsorptionsschicht angeordnet sein kann. Die Membran stellt gewissermaßen eine zusätzliche Barriereschicht gegenüber chemischen bzw. biologischen Giften dar und führt zu einer Verbesserung der Schutzfunktion gegenüber toxischen Substanzen insgesamt. Das Vorhandensein einer Membran hat zudem den Vorteil, daß die Adsorptionsschicht, insbesondere die Adsorbenspartikel, vor eindringenden chemischen und/oder biologischen Giften geschützt wird, so daß die Adsorptionsschicht als solche gewissermaßen nie erschöpft und die Schutzfunktion gegenüber chemischen bzw. biologischen Giften auch unter widrigen Bedingungen mit starken Giftstoffkontaminationen bei gleichzeitigem Stich- und/oder Schußschutz aufrechterhalten bleibt. Weiterhin hat das Vorhandensein einer Membran bzw. eines Membransystems den Vorteil, daß die Membran bzw. das Membransystem bei Einwirkung von Feuchtigkeit (z. B. bei der Verarbeitung des erfindungsgemäßen textilen Flächenmaterials zu Schutzbekleidung und deren Verwendung beispielsweise bei feuchter Witterung, insbesondere Regen etc.) in effizienter Weise verhindert, daß die Feuchtigkeit mit der stich- und/oder schußfesten Schicht in Kontakt kommt und deren Schutzwirkung reduziert (Üblicherweise wird durch Feuchtigkeitseinwirkung die Stich- bzw. Schußfestigkeit von stich- bzw. schußfesten Materialien erheblich reduziert wird.); auf diese Weise kann die Stich- bzw. Schußfestigkeit des textilen Flächenmaterials nach der vorliegenden Erfindung in effizienter Weise aufrechterhalten werden.

Derartige Membranen bzw. Membransysteme sind dem Fachmann wohlbekannt. Beispielsweise kann die Membran aus einem Kunststoff oder einen Polymermaterial bestehen oder ein solches Material umfassen, insbesondere wobei der Kunststoff oder das Polymermaterial ausgewählt ist aus der Gruppe von Polyurethanen, Polyetheramiden, Polyesteramiden, Polytetrafluorethylenen und/oder Polymeren auf Cellulosebasis sowie Derivaten der vorgenannten Verbindungen.

Die Membran kann eine kontinuierliche, insbesondere geschlossene oder allenfalls mikroporöse Membran sein. Die Dicke der Membran kann 1 bis 500 µm, insbesondere 1 bis 250 µm, vorzugsweise 1 bis 100 µm, bevorzugt 1 bis 50 µm, besonders bevorzugt von 2,5 bis 30 µm, ganz besonders bevorzugt 5 bis 25 µm, betragen. Die Membran kann gleichermaßen mit den Adsorbentien bzw. den Adsorbenspartikeln und/oder mit der stich- und/oder schußfesten Schicht insbesondere punktförmig verklebt sein. Im Benutzungs- bzw. Tragezustand des textilen Flächenmaterials nach der Erfindung, insbesondere in Form von Schutzanzügen, sollte die Membran zur Gewährleistung der vorgenannten Schutzfunktion auf der dem Körper des Trägers bzw. Benutzers abgewandten Seite der Adsorptionsschicht angeordnet sein.

Was das erfindungsgemäße textile Flächenmaterial anbelangt, so weist dieses, wie zuvor angeführt, hervorragende Eigenschaften hinsichtlich der Gewährleistung einer Schutzfunktion gegenüber Stich- und/oder Schußpenetrationen auf. So kann das textile Flächenmaterial nach der Erfindung eine Stichfestigkeit von mehr als 10 Newton, insbesondere mehr als 20 Newton, vorzugsweise mehr als 60 Newton, bevorzugt mehr als 100 Newton, besonders bevorzugt mehr als 150 Newton, gemäß der analog anzuwendenden DIN EN 388:2003, aufweisen. Zudem kann das textile Flächenmaterial nach der Erfindung eine Schnittfestigkeit von mehr als den Faktor 1,2, insbesondere mehr als den Faktor 2,5, vorzugsweise mehr als den Faktor 5, bevorzugt mehr als den Faktor 10, besonders bevorzugt mehr als den Faktor 20, gemäß DIN EN 388:2003, aufweisen. Weiterhin kann das textile Flächenmaterial nach der Erfindung eine Reißfestigkeit von mehr als 10 Newton, insbesondere mehr als 25 Newton, vorzugsweise mehr als 50 Newton, bevorzugt mehr als 75 Newton, gemäß DIN EN 388:2003, aufweisen. Schließlich kann das textile Flächenmaterial eine Abriebfestigkeit von mehr als 100 Zyklen, insbesondere mehr als 500 Zyklen, vorzugsweise mehr als 1.000 Zyklen, bevorzugt mehr als 2.000 Zyklen, besonders bevorzugt mehr als 5.000 Zyklen, gemäß DIN EN 388:2003, aufweisen.

Zudem weist das erfindungsgemäße textile Flächenmaterial eine hervorragende Schutzfunktion gegenüber chemischen und/oder biologischen Giften bzw. Kampfstoffen auf. So kann das erfindungsgemäße textile Flächenmaterial im allgemeinen eine Barrierewirkung gegenüber chemischen Kampfstoffen, insbesondere Bis[2-chlorethyl]sulfid (synonym auch als Senfgas, Lost oder Gelbkreuz bezeichnet), bestimmt nach Methode 2.2 der CRDEC-SP-84010, von höchstens 4 µg/g² pro 24 h, insbesondere höchstens 3,5 µg/g² pro 24 h, vorzugsweise höchstens 3 µg/g² pro 24 h, besonders bevorzugt höchstens 2,5 µg/g² pro 24 h, aufweisen.

Weiterhin ist es erfindungsgemäß vorteilhaft, wenn das textile Filtermaterial nach der Erfindung gasdurchlässig, insbesondere luftdurchlässig, ist, was insbesondere dann der Fall ist, wenn keine Membran vorgesehen ist. Die Gas- bzw. Luftdurchlässigkeit des erfindungsgemäßen textilen Filtermaterials sollte mindestens 10 1·m⁻²·s⁻¹, insbesondere mindestens 30 1·m⁻²·s⁻¹, vorzugsweise mindestens 50 1·m²·s⁻¹ besonders bevorzugt mindestens 100 1·m⁻²·s⁻¹, ganz besonders bevorzugt mindestens 400 1·m⁻²·s⁻¹, betragen und/oder bis zu 10.000 1·m²·s⁻¹ bei einem Strömungswiderstand von 127 Pa betragen.

Weitere Vorteile, Eigenschaften, Aspekte und Merkmale der vorliegenden Erfindung ergeben sich aus der folgenden Beschreibung von in den Figuren dargestellten Ausführungsbeispielen. Es zeigen:

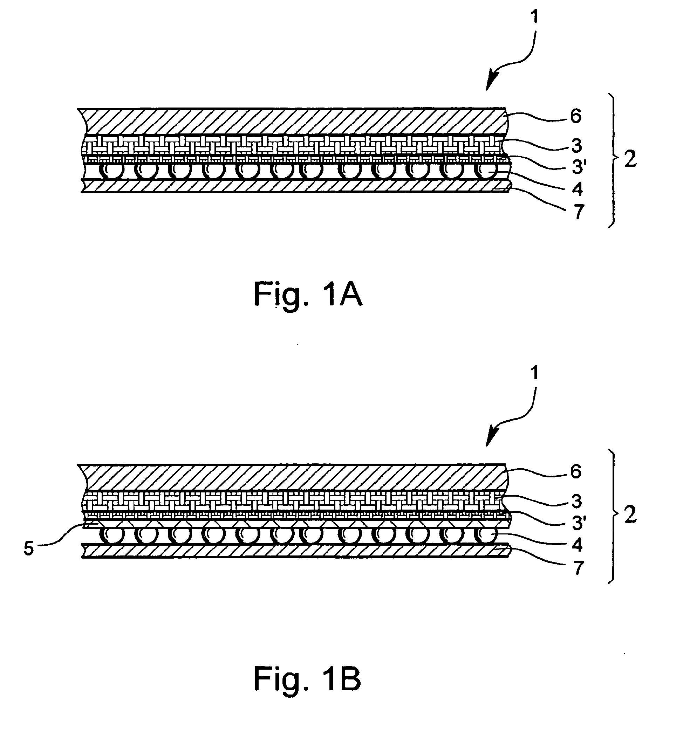

- Fig. 1A: eine schematische Schnittdarstellung durch den Schichtaufbau eines erfindungsgemäßen textilen Flächenmaterials, wonach die Adsorbenspartikel der Adsorptionsschicht direkt auf einer stich- oder schußfesten Schicht angeordnet sind; und
- Fig. 1B: eine schematische Schnittdarstellung durch den Schichtaufbau eines erfindungsgemäßen Adsorptionsfiltermaterials gemäß einer weiteren Ausführungsform der vorliegenden Erfindung, wonach zwischen der stich- und/oder schußfesten Schicht und der Adsorptionsschicht ein zusätzlicher Träger angebracht ist.

Fig. 1A zeigt eine schematische Schnittdarstellung durch den Schichtaufbau 2 des erfindungsgemäßen textilen Flächenmaterials 1 entsprechend einer speziellen Ausgestaltung der vorliegenden Erfindung. Der mehrschichtige Schichtaufbau 2 des erfindungsgemäßen textilen Flächenmaterials 1 weist zwei stich- und/oder schußfeste Schichten 3, 3' und eine Adsorptionsschicht 4 auf Basis diskreter Adsorbenspartikel auf. Die Adsorbenspartikel sind auf der zweiten stich- und/oder schußfesten Schicht 3' aufgebracht. Zudem weist das textile Flächenmaterial 1 nach der Erfindung gemäß dieser Ausführungsform eine erste Abdeckschicht 6, welche der ersten stich- und/oder schußfesten Schicht 3 zugeordnet ist, und eine zweite Abdeckschicht 7 auf, welche der Adsorptionsschicht 4 zugeordnet ist.

Weiterhin zeigt Fig. 1B eine schematische Schnittdarstellung durch den Schichtaufbau 2 eines erfindungsgemäßen textilen Flächematerials 1 entsprechend einer weiteren speziellen Ausgestaltung der vorliegenden Erfindung. Das erfindungsgemäße textile Flächenmaterial 1 weist in Ergänzung zu dem in Fig. 1A dargestellten Schichtaufbau einen zusätzlichen Träger 5 auf, welcher zwischen der Adsorptionsschicht 4 und der zweiten stich- und/oder schußfesten Schicht 3' angeordnet ist.

Wie zuvor bereits beschrieben, kann gemäß einer besonderen Ausführungsform der vorliegenden Erfindung das textile Flächenmaterial 1 zusätzlich hitzebeständig und/oder feuerbeständig (flammbeständig) ausgerüstet sein, insbesondere hitzebeständige und/oder feuerbeständige (flammbeständige) Fasern und/oder Garne enthalten (nicht in den Figuren dargestellt); dabei können die hitzebeständigen und/oder feuerbeständigen (flammbeständigen) Fasern und/oder Garne Bestandteil der stich- und/oder schutzfesten Schicht 3, 3' sein bzw. hierin enthalten sein (nicht in den Figuren dargestellt) und/oder eine separate Schicht ausbilden (ebenfalls nicht in den Figuren dargestellt).

Für weitere diesbezügliche Einzelheiten zu dem erfindungsgemäßen Adsorptionsfiltermaterial 1 kann auf die vorstehenden Ausführungen verwiesen werden.

Weiterer Gegenstand der vorliegenden Erfindung - gemäß einem zweiten Aspekt der vorliegenden Erfindung - sind die erfindungsgemäßen Schutzmaterialien, insbesondere Schutzanzüge, Schutzhandschuhe, Schutzschuhe und Schutzabdeckungen, welche unter Verwendung des textilen Flächenmaterials nach der Erfindung, wie zuvor definiert, hergestellt sind bzw. welche das textile Flächenmaterial 1 nach der Erfindung, wie zuvor definiert, aufweisen.

Die Herstellung der erfindungsgemäßen Schutzmaterialien bzw. des textilen Flächenmaterials nach der Erfindung kann in an sich bekannter Weise erfolgen. Dies ist dem mit der Herstellung von Schutzmaterialien befaßten Fachmann bestens bekannt, so daß es diesbezüglich keiner weiteren Einzelheiten bedarf.

Schließlich ist Gegenstand der vorliegenden Erfindung - gemäß einem **dritten** Aspekt der vorliegenden Erfindung - die Verwendung des textilen Flächenmaterials nach der Erfindung, wie zuvor definiert, zur Herstellung von Schutzmaterialien aller Art, insbesondere Schutzanzügen, Schutzhandschuhen, Schutzschuhen und Schutzabdeckungen, vorzugsweise für den ABC-Einsatz.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand des nachfolgenden Ausführungsbeispiels veranschaulicht, welches die vorliegende Erfindung jedoch keinesfalls beschränken soll.

### AUSFÜHRUNGSBEISPIELE:

Es werden unterschiedliche textile Flächenmaterialien hergestellt, nämlich ein Vergleichsmaterial ohne Adsorptionsschicht und erfindungsgemäße textile Flächenmaterialien mit einer auf einer stich- und schußfesten Schicht aufgebrachten Adsorptionsschicht auf Basis diskreter Adsorbensteilchen.

Zur Herstellung der erfindungsgemäßen textilen Flächenmaterialien wird eine stich- und/oder schußfeste Schicht auf Basis eines Gewebes aus Aramidfasern eingesetzt, wobei Fasern bzw. Garne auf Basis von Poly(p-phenylenterephthalamid), welche erhältlich sind von der Firma E.I. Dupont de Nemours and Company und welche unter der Produktbezeichnung Kevlar^{®} vertrieben werden, verwendet werden. Das resultierende Gewebe weist einen Deckfaktor von 0,72 und ein Flächengewicht von etwa 1 kg/m² auf. Auf diese stich- und/oder schußfeste Schicht wird punktrasterförmig ein Klebstoff in einer Menge von etwa 40 g/m² bei einem Bedeckungsgrad von 75 % zur Fixierung der Adsorbentien aufgebracht. Als Adsorbenspartikel wird korn- bzw. kugelförmige Aktivkohle mit einem mittleren Teilchendurchmesser (D₅₀-Wert) von etwa 0,3 mm in einer Menge von 100 g/m² aufgebracht. Die Adsorbenspartikel weisen einen Berstdruck von etwa 15 N auf. Anschließend werden auf die Adsorptionsschicht eine zweite Abdeckschicht und auf der der Adsorptionsschicht abgewandten Seite des stich- und/oder schußfesten Gewebes eine erste Abdeckschicht aufgebracht.

Weitere erfindungsgemäße textile Flächenmaterialien werden mit jeweils unterschiedlicher Beladungsmenge der Adsorbentien hergestellt, wobei diesbezüglich die zuvor beschriebene korn- bzw. kugelförmige Aktivkohle in einer jeweiligen Menge von 50 g/m², 300 g/m², 400 g/m² bzw. 500 g/m² eingesetzt wird. Die Klebstoffmenge und der Bedeckungsgrad mit Klebstoff werden entsprechend angepasst.

Das Vergleichsmaterial wurde in entsprechender Weise hergestellt, wobei jedoch die zweite Abdeckschicht direkt auf die der ersten Abdeckschicht abgewandten Seite der stich- und/oder schußfesten Schicht aufgebracht wurde. Das Vergleichsmaterial weist keine Aktivkohle auf.

Bei den erfindungsgemäßen Beispielen und dem Vergleichsbeispiel wird die Stichfestigkeit analog zu der DIN EN 388:2003 bestimmt, wobei als Durchstichkraft diejenige Kraft definiert ist, die erforderlich ist, um ein auf einer Haltevorrichtung befestigtes Prüfmuster mit Hilfe eines Stahlstiftes mit Haltevorrichtung befestigtes Prüfmuster mit Hilfe eines Stahlstiftes mit definierten Maßen zu durchstechen.

Für das nichterfindungsgemäße Vergleichsbeispiel wurde diesbezüglich eine Stichfestigkeit von lediglich 14 Newton ermittelt, während für das erfindungsgemäße Beispiel unter Einsatz der Adsorptionsschicht eine diesbezügliche Stichfestigkeit von 25 Newton bei einer Aktivkohlebeladung von 50 g/m², von 52 Newton bei einer Aktivkohlebeladung von 100 g/m², von 65 Newton bei einer Aktivkohlebeladung von 300 g/m², von 69 Newton bei einer Aktivkohlebeladung von 400 g/m² und von 70 Newton bei einer Aktivkohlebeladung 500 g/m² ermittelt wird. Die erfindungsgemäßen Materialien weisen somit im Vergleich zu dem nichterfindungsgemäßen Material deutlich verbesserte Eigenschaften auf. Zudem ist zu beobachten, daß mit zunehmender Beladungsmenge an Aktivkohle die Stichfestigkeit bzw. der Stichschutz weiter verbessert wird, wobei bei einer Beladungsmenge von 300 g/m² und 400 g/m² hervorragende Werte bei gleichzeitig guter Biegsamkeit des Materials ermittelt werden. Der Stichschutz ist bei einer Beladungsmenge von 500 g/m² nur noch geringfügig verbessert, wobei das Material bei dieser Beladungsmenge deutlich steifer und weniger biegsam ist.

Die verschiedenen Flächenmaterialien wurden zudem zwölf Stunden lang einer gesättigten Wasserdampfatmosphäre bei 25 °C ausgesetzt. Bei dem nichterfindungsgemäßen Vergleichsbeispiel wurde anschließend eine Reduzierung der Stichfestigkeit um 34 % ermittelt, während diese Reduzierung für die erfindungsgemäßen Beispiele mit einer Aktivkohlebeladung von 50 g/m² nur 8 % und bei einer Aktivkohlebeladung von 100 g/m² nur 2 % betrug und bei einer Aktivkohlebeladung von 300 g/m² und von 400 g/m² überhaupt keine Reduzierung der Stichfestigkeit auftrat.

Die zuvor angeführten Ausführungsbeispiele zeigen die hervorragenden Eigenschaften des erfindungsgemäßen textilen Flächenmaterials hinsichtlich der Schutzfunktion gegenüber Stich- bzw. Schußeinwirkungen.

## Patentansprüche

1. Textiles Flächenmaterial (1) mit Stich- und/oder Schußfestigkeit und mit Schutzfunktion gegenüber chemischen und/oder biologischen Giften, insbesondere Kampfstoffen, wobei das textile Flächenmaterial (1) einen mehrschichtigen Schichtaufbau (2) aufweist, wobei der Schichtaufbau (2)
- mindestens eine stich- und/oder schußfeste Schicht (3, 3'), wobei die stich- und/oder schußfeste Schicht (3, 3') ein Gewebe ist und ein Flächengewicht von 0,5 kg/m² bis 8 kg/m² aufweist und wobei die stich- und/oder schußfeste Schicht (3, 3') Fasern und/oder Garne auf Basis von Aramiden enthält oder hieraus besteht, wobei die Fasern und/oder Garne einen Fasertiter von 50 bis 5.000 Denier aufweisen,
und
- mindestens eine Adsorptionsschicht (4) auf Basis diskreter Adsorbenspartikel, wobei die Adsorbenspartikel der Adsorptionsschicht (4) auf Basis von Aktivkohle in Form von Aktivkohleteilchen ausgebildet sind,
aufweist, wobei das textile Flächenmaterial (1) eine Stichfestigkeit von mehr als 10 Newton, gemäß DIN EN 388:2003, und eine Reißfestigkeit von mehr als 10 Newton, gemäß DIN EN 388:2003, aufweist.

2. Textiles Flächenmaterial nach Anspruch 1, wobei die Adsorbenspartikel der Adsorptionsschicht (4) an der stich- und/oder schußfesten Schicht (3, 3') befestigt sind, insbesondere wobei die stich- und/oder schußfeste Schicht (3, 3') als Träger für die Adsorbenspartikel der Adsorptionsschicht (4) dient.

3. Textiles Flächenmaterial nach Anspruch 1, wobei das textile Flächenmaterial (1) eine vorzugsweise zwischen der stich- und/oder schußfesten Schicht (3, 3') und der Adsorptionsschicht (4) angeordnete Trägerschicht (5) aufweist, wobei die Adsorbenspartikel der Adsorptionsschicht (4) an der Trägerschicht (5) befestigt sind, insbesondere wobei die Trägerschicht (5) als Träger für die Adsorbenspartikel der Adsorptionsschicht (4) dient.

4. Textiles Flächenmaterial nach einem der vorangehenden Ansprüche, wobei die Adsorbenspartikel der Adsorptionsschicht (4) vorzugsweise mittels eines diskontinuierlich, insbesondere punktförmig aufgetragenen Klebstoffes an der stich- und/oder schußfesten Schicht (3, 3') und/oder an der Trägerschicht (5) fixiert sind,
insbesondere wobei die Adsorbenspartikel der Adsorptionsschicht (4) zu mindestens 50 %, insbesondere zu mindestens 60 %, vorzugsweise zu mindestens 70 %, für die zu adsorbierenden chemischen und/oder biologischen Gifte frei zugänglich ist und/oder insbesondere wobei Adsorbenspartikel zu mindestens 50 %, insbesondere zu mindestens 60 %, vorzugsweise zu mindestens 70 %, nicht mit Klebstoff bedeckt sind und/oder
insbesondere wobei der Klebstoff in einer Menge von 1 bis 200 g/ m², insbesondere 5 bis 150 g/m², vorzugsweise 10 bis 120 g/m², bevorzugt 20 bis 100 g/m², besonders bevorzugt 25 bis 80 g/m², ganz besonders bevorzugt 30 bis 75 g/m², aufgetragen ist.

5. Textiles Flächenmaterial nach einem der vorangehenden Ansprüche, wobei mindestens 50 %, insbesondere mindestens 60 %, vorzugsweise mindestens 70 %, besonders bevorzugt mindestens 75 %, ganz besonders bevorzugt mindestens 80 %, der mit den Adsorbenspartikel der Adsorptionsschicht (4) beaufschlagten Seite der stich- und/oder schußfesten Schicht (3, 3') und/oder der Trägerschicht (5) mit den Adsorbenspartikeln beaufschlagt ist.

6. Textiles Flächenmaterial nach einem der vorangehenden Ansprüche, wobei die Adsorbenspartikel der Adsorptionsschicht (4) einen mittleren Durchmesser von < 1,0 mm, insbesondere < 0,5 mm, vorzugsweise < 0,4 mm, bevorzugt < 0,35 mm, besonders bevorzugt < 0,3 mm, aufweisen und/oder wobei der mittlere Durchmesser der Adsorbenspartikel mindestens 0,1 mm beträgt und/oder wobei die Adsorbenspartikel der Adsorptionsschicht (4) in einer Menge von 5 bis 500 g/m², insbesondere 10 bis 450 g/ m², vorzugsweise 20 bis 400 g/m², bevorzugt 25 bis 350 g/ m², besonders bevorzugt 50 bis 325 g/m², ganz besonders bevorzugt 50 bis 300 g/m², auf der stich- und/oder schußfesten Schicht (3, 3') und/oder auf der Trägerschicht (5) aufgebracht sind.

7. Textiles Flächenmaterial nach einem der vorangehenden Ansprüche, wobei die Adsorbenspartikel der Adsorptionsschicht (4) einen Berstdruck je einzelnem Adsorbenspartikel von mindestens 5 Newton, insbesondere mindestens 10 Newton, und/oder von bis zu 20 Newton aufweisen.

8. Textiles Flächenmaterial nach einem der vorangehenden Ansprüche, wobei das Aramid ausgewählt ist aus der Gruppe von para-Aramiden sowie deren Copolymeren und Mischungen.

9. Textiles Flächenmaterial nach einem der vorangehenden Ansprüche, wobei die Fasern und/oder Garne einen Fasertiter von 60 bis 4.000 Denier, vorzugsweise 70 bis 3.000 Denier, und/oder wobei die Fasern und/oder Garne eine Festigkeit von mindestens 10 g/Denier (gpd), insbesondere mindestens 20 g/Denier, vorzugsweise mindestens 30 g/Denier, aufweisen und/oder wobei die Fasern und/oder Garne eine Reißdehnung von mindestens 1,5 %, insbesondere mindestens 1,8 %, vorzugsweise mindestens 2,0 %, bevorzugt mindestens 2,2 %, ganz besonders bevorzugt mindestens 2,4 %, aufweisen.

10. Textiles Flächenmaterial nach einem der vorangehenden Ansprüche, wobei die stich- und/oder schußfeste Schicht(en) (3, 3') insgesamt ein Flächengewicht von 0,75 kg/m² bis 6 kg/m², bevorzugt 1 kg/m² bis 4 kg/m², aufweist bzw. aufweisen und/oder
wobei die stich- und/oder schußfeste Schicht(en) (3, 3') in Form eines Gewebes mit 1 Million bis 20 Million Faserüberkreuzungspunkte/cm², insbesondere 2 Million bis 17 Million Faserüberkreuzungspunkte/cm², vorzugsweise 3 bis 15 Million Faserüberkreuzungspunkte/cm², ausgebildet ist.

11. Textiles Flächenmaterial nach einem der vorangehenden Ansprüche, wobei das textile Flächenmaterial (1) zusätzlich eine erste Abdeckschicht (6) aufweist, insbesondere wobei die erste Abdeckschicht (6) auf der der Adsorptionsschicht (4) abgewandten Seite der stich- und/oder schußfesten Schicht (3, 3') angeordnet ist und/oder insbesondere wobei die erste Abdeckschicht (6) im Gebrauchszustand des textilen Flächenmaterials (1) außenseitig angeordnet ist, und/oder
wobei das textile Flächenmaterial (1) zusätzlich eine zweite Abdeckschicht (7) aufweist, insbesondere wobei die zweite Abdeckschicht (7) auf der der stich- und/oder schußfesten Schicht (3, 3') abgewandten Seite der Adsorptionsschicht (4) angeordnet ist und/oder insbesondere wobei die zweite Abdeckschicht (7) im Gebrauchszustand des textilen Flächenmaterials (1) innenseitig angeordnet ist, und/oder
wobei das textile Flächenmaterial (1) zusätzlich eine zumindest im wesentlichen wasser- und luftundurchlässige, aber wasserdampfdurchlässige, den Durchtritt chemischer und/oder biologischer Gifte verzögernde oder gegenüber chemischen und/oder biologischen Giften zumindest im wesentlichen undurchlässige Membran aufweist, insbesondere wobei die Membran zwischen der stich- und/oder schußfesten Schicht (3, 3') und der Adsorptionsschicht (4) angeordnet ist.

12. Textiles Flächenmaterial nach einem der vorangehenden Ansprüche, wobei das textile Flächenmaterial (1) eine Stichfestigkeit von insbesondere mehr als 20 Newton, vorzugsweise mehr als 60 Newton, bevorzugt mehr als 100 Newton, besonders bevorzugt mehr als 150 Newton, gemäß DIN EN 388:2003, aufweist und/oder wobei das textile Flächenmaterial (1) eine Schnittfestigkeit von mehr als den Faktor 1,2, insbesondere mehr als den Faktor 2,5, vorzugsweise mehr als den Faktor 5, bevorzugt mehr als den Faktor 10, besonders bevorzugt mehr als den Faktor 20, gemäß DIN EN 388:2003, aufweist.

13. Textiles Flächenmaterial nach einem der vorangehenden Ansprüche, wobei das textile Flächenmaterial (1) eine Reißfestigkeit von mehr als 25 Newton, vorzugsweise mehr als 50 Newton, bevorzugt mehr als 75 Newton, gemäß DIN EN 388:2003, aufweist und/oder
wobei das textile Flächenmaterial (1) eine Abbriebfestigkeit von mehr als 100 Zyklen, insbesondere mehr als 500 Zyklen, vorzugsweise mehr als 1.000 Zyklen, bevorzugt mehr als 2.000 Zyklen, besonders bevorzugt mehr als 5.000 Zyklen, gemäß DIN EN 388:2003, aufweist.

14. Schutzmaterialien, insbesondere Schutzanzüge, Schutzhandschuhe, Schutzschuhe und Schutzabdeckungen, hergestellt unter Verwendung eines textilen Flächenmateriales (1) nach einem der vorangehenden Ansprüche und/oder aufweisend ein textiles Flächenmaterial (1) nach einem der vorangehenden Ansprüche.

15. Verwendung eines textilen Flächenmateriales (1) nach einem der vorangehenden Ansprüche zur Herstellung von Schutzmaterialien aller Art, insbesondere Schutzanzügen, Schutzhandschuhen, Schutzschuhen und Schutzabdeckungen, vorzugsweise für den ABC-Einsatz.

## Claims

1. Textile surface material (1) with stab-proofness and/or bullet-proofness and with protective function against chemical and/or biological toxicants, especially warfare agents, wherein the textile surface material (1) has a laminated layered construction (2), wherein the layered construction (2) has
- at least one stab-proof and/or bullet-proof layer (3, 3'), wherein the stab-proof and/or bullet-proof layer (3, 3') is a woven fabric and has a weight per unit area of between 0.5 kg/m² and 8 kg/m² and wherein the stab-proof and/or bullet-proof layer (3, 3') contain, or contains, fibres and/or yarns on a base of aramids, or consists thereof, wherein the fibres and/or yarns have a fibre titer of between 50 and 5,000 denier,
and
- at least one adsorption layer (4) on a base of discrete adsorbent particles, wherein the adsorbent particles of the adsorption layer (4) are formed on a base of activated carbon in the form of small activated carbon particles,
wherein the textile surface material (1) has a stab-proofness of more than 10 newtons, according to DIN EN 388:2003, and a tear resistance of more than 10 newtons, according to DIN EN 388:2003.

2. Textile surface material according to Claim 1, wherein the adsorbent particles of the adsorption layer (4) are fastened on the stab-proof and/or bullet-proof layer (3, 3'), especially wherein the stab-proof and/or bullet-proof layer (3, 3') serves as a carrier for the adsorbent particles of the adsorption layer (4).

3. Textile surface material according to Claim 1, wherein the textile surface material (1) has a carrier layer (5) which is preferably arranged between the stab-proof and/or bullet-proof layer (3, 3') and the adsorption layer (4), wherein the adsorbent particles of the adsorption layer (4) are fastened on the carrier layer (5), especially wherein the carrier layer (5) serves as a carrier for the adsorbent particles of the adsorption layer (4).

4. Textile surface material according to one of the preceding claims, wherein the adsorbent particles of the adsorption layer (4) are fixed on the stab-proof and/or bullet-proof layer (3, 3') and/or on the carrier layer (5) preferably by means of a discontinuously applied, especially spot-form applied, adhesive,
especially wherein the adsorbent particles of the adsorption layer (4) are at least 50%, especially at least 60%, preferably at least 70%, freely accessible to the chemical and/or biological toxicants which are to be adsorbed, and/or especially wherein adsorbent particles are at least 50%, especially at least 60%, preferably at least 70%, not covered with adhesive, and/or
especially wherein the adhesive is applied in a quantity of between 1 and 200 g/m², especially between 5 and 150 g/m², preferably between 10 and 120 g/m², preferentially between 20 and 100 g/m², especially preferentially between 25 and 80 g/m², most especially preferentially between 30 and 75 g/m²_{.}

5. Textile surface material according to one of the preceding claims, wherein at least 50%, especially at least 60%, preferably at least 70%, especially preferentially at least 75%, most especially preferentially at least 80%, of the side of the stab-proof and/or bullet-proof layer (3, 3') and/or of the carrier layer (5) to which is applied the adsorbent particles of the adsorption layer (4) is subjected to the application of adsorbent particles.

6. Textile surface material according to one of the preceding claims, wherein the adsorbent particles of the adsorption layer (4) have an average diameter of < 1.0 mm, especially < 0.5 mm, preferably < 0.4 mm, preferentially <0.35 mm, especially preferentially < 0.3 mm, and/or wherein the average diameter of the adsorbent particles is at least 0.1 mm, and/or
wherein the adsorbent particles of the adsorption layer (4) are applied to the stab-proof and/or bullet-proof layer (3, 3') and/or to the carrier layer (5) in a quantity of between 5 and 500 g/m², especially between 10 and 450 g/m², preferably between 20 and 400 g/m², preferentially between 25 and 350 g/m², especially preferentially between 50 and 325 g/m², most especially preferentially between 50 and 300 g/m².

7. Textile surface material according to one of the preceding claims, wherein the adsorbent particles of the adsorption layer (4) have a bursting pressure per individual adsorbent particle of at least 5 newtons, especially of at least 10 newtons and/or of up to 20 newtons.

8. Textile surface material according to one of the preceding claims, wherein the aramid is selected from the group comprising para-aramids and also their copolymers and mixtures.

9. Textile surface material according to one of the preceding claims, wherein the fibres and/or yarns have a fibre titer of between 60 and 4,000 denier, preferably of between 70 and 3,000 denier, and/or wherein the fibres and/or yarns have a tenacity of at least 10 g/denier (gpd), especially of at least 20 g/denier, preferably of at least 30 g/denier, and/or wherein the fibres and/or yarns have an elongation at tear of at least 1.5%, especially of at least 1.8%, preferably of at least 2.0%, preferentially of at least 2.2%, most especially preferentially of at least 2.4%.

10. Textile surface material according to one of the preceding claims, wherein the stab-proof and/or bullet-proof layer(s) (3, 3') have, or has, overall a weight per unit area of between 0.75 kg/m² and 6 kg/m², preferably between 1 kg/m² and 4 kg/m², and/or
wherein the stab-proof and/or bullet-proof layer(s) (3, 3') are, or is, designed in the form of a woven fabric with between 1 million and 20 million fibre intersection points/cm², especially between 2 million and 17 million fibre intersecting points/cm², preferably between 3 and 15 million fibre intersection points/cm²_{.}

11. Textile surface material according to one of the preceding claims, wherein the textile surface material (1) additionally has a first cover layer (6), especially wherein the first cover layer (6) is arranged on the side of the stab-proof and/or bullet-proof layer (3, 3') facing away from the adsorption layer (4), and/or especially wherein the first cover layer (6) is arranged on the outside in the in-use state of the textile surface material (1), and/or
wherein the textile surface material (1) additionally has a second cover layer (7), especially wherein the second cover layer (7) is arranged on the side of the adsorption layer (4) facing away from the stab-proof and/or bullet-proof layer (3, 3'), and/or especially wherein the second cover layer (7) is arranged on the inside in the in-use state of the textile surface material (1), and/or
wherein the textile surface material (1) additionally has a membrane which at least for the most part is impermeable by water and air, but permeable by water vapour, delays the penetration of chemical and/or biological toxicants or is at least for the most part impermeable by chemical and/or biological toxicants, especially wherein the membrane is arranged between the stab-proof and/or bullet-proof layer (3, 3') and the adsorption layer (4).

12. Textile surface material according to one of the preceding claims, wherein the textile surface material (1) has a stab-proofness of especially more than 20 newtons, preferably of more than 60 newtons, preferentially of more than 100 newtons, especially preferentially of more than 150 newtons, according to DIN EN 388:2003, and/or wherein the textile surface material (1) has a cut resistance of more than the factor of 1.2, especially of more than the factor of 2.5, preferably of more than the factor of 5, preferentially of more than the factor of 10, especially preferentially of more than the factor of 20, according to DIN EN 388:2003.

13. Textile surface material according to one of the preceding claims, wherein the textile surface material (1) has a tear resistance of more than 25 newtons, preferably of more than 50 newtons, preferentially of more than 75 newtons, according to DIN EN 388:2003, and/or
wherein the textile surface material (1) has an abrasion resistance of more than 100 cycles, especially of more than 500 cycles, preferably of more than 1,000 cycles, preferentially of more than 2,000 cycles, especially preferentially of more than 5,000 cycles, according to DIN EN 388:2003.

14. Protective materials, especially protective suits, protective gloves, protective shoes and protective hoods, produced using a textile surface material (1) according to one of the preceding claims and/or featuring a textile surface material (1) according to one of the preceding claims.

15. Use of a textile surface material (1) according to one of the preceding claims for producing protective materials of all types, especially protective suits, protective gloves, protective shoes and protective hoods, preferably for chemical, biological, radiological and nuclear (CBRN) use.

## Revendications

1. Matériau textile (1) avec une résistance aux piqûres et/ou à l'épreuve des balles et avec une fonction de protection contre des poisons chimiques et/ou biologiques, plus particulièrement des substances de combat, le matériau textile (1) présentant une structure multicouche (2), la structure en couche (2) :
- présentant au moins une couche résistante aux piqûres et/ou à l'épreuve des balles (3, 3'), la couche résistante aux piqûres et/ou à l'épreuve des balles (3, 3') étant un tissu et présentant un poids surfacique de 0,5 kg/m² à 8 kg/m² et la couche résistante aux piqûres et/ou à l'épreuve des balles (3, 3') contenant des fibres et/ou des fils à base d'aramides ou en est constituée, les fibres et/ou fils présentant un titre de fibre de 50 à 5000 deniers,
et
- présentant au moins une couche d'adsorption (4) à base de particules adsorbantes discrètes, les particules adsorbantes de la couche d'adsorption (4) étant constituées de charbon actif sous la forme de particules de charbon actif,
le matériau textile (1) présentant une résistance aux piqûres supérieure à 10 newton, selon DIN EN 388:2003 et une résistance à la déchirure supérieure à 10 newton, selon DIN EN 388:2003.

2. Matériau textile selon la revendication 1, les particules adsorbantes de la couche d'adsorption (4) étant fixées à la couche résistante aux piqûres et/ou à l'épreuve des balles (3, 3'), plus particulièrement la couche résistante aux piqûres et/ou à l'épreuve des balles (3, 3') servant de support pour les particules adsorbantes de la couche d'adsorption (4).

3. Matériau textile selon la revendication 1, le matériau textile (1) comprenant une couche de support (5) disposée de préférence entre la couche résistante aux piqûres et/ou à l'épreuve des balles (3, 3') et la couche d'adsorption (4), les particules adsorbantes de la couche d'adsorption (4) étant fixées sur la couche de support (5), plus particulièrement la couche de support (5) servant de support pour les particules adsorbantes de la couche d'adsorption (4).

4. Matériau textile selon l'une des revendications précédentes, les particules adsorbantes de la couche d'adsorption (4) étant fixées, de préférence à l'aide d'une colle appliquée de manière discontinue, plus particulièrement de manière ponctuelle, sur la couche résistante aux piqûres et/ou à l'épreuve des balles (3, 3') et/ou sur la couche de support (5),
plus particulièrement, les particules adsorbantes de la couche d'adsorption (4) étant librement accessibles à au moins 50%, plus particulièrement à au moins 60%, de préférence à au moins 70% aux poisons chimiques et/ou biologiques à absorber, les particules adsorbantes n'étant pas recouvertes à au moins 50%, plus particulièrement à au moins 60%, de préférence à au moins 70%, de colle et/ou
plus particulièrement, la colle étant appliquée dans une quantité de 1 à 200 g/m², plus particulièrement de 5 à 150 g/m², de préférence de 10 à 120 g/m², de préférence de 20 à 100 g/m², plus particulièrement de préférence de 25 à 80 g/m², encore plus particulièrement de préférence de 30 à 75 g/m².

5. Matériau textile selon l'une des revendications précédentes, au moins 50%, plus particulièrement au moins 60%, de préférence au moins 70%, plus particulièrement de préférence au moins 75%, encore plus particulièrement de préférence au moins 80% du côté de la couche résistante aux piqûres et/ou à l'épreuve des balles (3, 3') et/ou de la couche de support (5) comprenant les particules adsorbantes de la couche d'adsorption (4) comprend les particules adsorbantes.

6. Matériau textile selon l'une des revendications précédentes, les particules adsorbantes de la couche d'adsorption (4) présentent un diamètre moyen < 1,0 mm, plus particulièrement < 0,5 mm, de préférence < 0,4 mm, de préférence < 0,35 mm, plus particulièrement de préférence < 0,3 mm et/ou le diamètre moyen des particules adsorbantes étant d'au moins 0,1 mm et/ou
les particules adsorbantes de la couche d'adsorption (4) étant appliquées dans une quantité de 5 à 500 g/m², plus particulièrement de 10 à 450 g/m², de préférence de 20 à 400 g/m², de préférence de 25 à 350 g/m², plus particulièrement de préférence de 50 à 325 g/m², encore plus particulièrement de préférence de 50 à 300 g/m², sur la couche résistante aux piqûres et/ou à l'épreuve des balles (3, 3') et/ou sur la couche de support (5).

7. Matériau textile selon l'une des revendications précédentes, les particules adsorbantes de la couche d'adsorption (4) présentant une pression d'éclatement par particule adsorbante d'au moins 5 newton, plus particulièrement au moins 10 newton et/ou de jusqu'à 20 newton.

8. Matériau textile selon l'une des revendications précédentes, l'aramide étant sélectionnée dans le groupe constitué de para-aramides ainsi que de leurs copolymères et mélanges.

9. Matériau textile selon l'une des revendications précédentes, les fibres et/ou fils présentant un titre de fibres de 60 à 4000 deniers, de préférence de 70 à 3000 deniers, et/ou les fibres et/ou fils présentant une résistance d'au moins 10g/denier (gpd), plus particulièrement d'au moins 20 g/denier, de préférence d'au moins 30 g/denier, et/ou les fibres et/ou fils présentant un allongement à la rupture d'au moins 1,5%, plus particulièrement d'au moins 1,8%, de préférence d'au moins 2,0%, de préférence d'au moins 2,2%, plus particulièrement de préférence d'au moins 2,4%.

10. Matériau textile selon l'une des revendications précédentes, la (les) couche(s) résistante(s) aux piqûres et/ou à l'épreuve des balles (3, 3') présente(nt) au total un poids surfacique de 0,75 kg/m² à 6 kg/m², de préférence de 1 kg/m² à 4 kg/m², et/ou
la (les) couche(s) résistante(s) aux piqûres et/ou à l'épreuve des balles (3, 3') étant conçue sous la forme d'un tissu avec 1 million à 17 millions de points de croisement de fibres/cm², de préférence 3 à 15 millions de points de croisement de fibres/cm².

11. Matériau textile selon l'une des revendications précédentes, le matériau textile (1) comprenant en outre une première couche de revêtement (6), plus particulièrement la première couche de revêtement (6) étant disposée sur le côté de la couche résistante aux piqûres et/ou à l'épreuve des balles (3, 3') opposé à la couche d'adsorption (4) et/ou plus particulièrement la première couche de revêtement (6) étant disposée, dans l'état d'utilisation du matériau textile (1), à l'extérieur, et/ou
le matériau textile (1) comprenant en outre une deuxième couche de revêtement (7), la deuxième couche de revêtement (7) étant disposée sur le côté de la couche d'adsorption (4) opposé à la couche résistante aux piqûres et/ou à l'épreuve des balles (3, 3') et/ou plus particulièrement la deuxième couche de revêtement (7) étant disposé, dans l'état d'utilisation du matériau textile (1), à l'intérieur, et/ou
le matériau textile (1) comprenant en outre une membrane au moins essentiellement imperméable à l'eau et à l'air mais perméable à la vapeur d'eau, retardant la pénétration des poisons chimiques et/ou biologiques ou au moins essentiellement imperméable aux poisons chimiques et/ou biologiques, plus particulièrement la membrane étant disposée entre la couche résistante aux piqûres et/ou à l'épreuve des balles (3, 3') et la couche d'adsorption (4).

12. Matériau textile selon l'une des revendications précédentes, le matériau textile (1) présentant une résistance aux piqûres plus particulièrement supérieure à 20 newton, de préférence supérieure à 60 newton, de préférence supérieure à 100 newton, plus particulièrement de préférence supérieure à 150 newton, selon DIN EN 388:2003, et/ou le matériau textile (1) présentant une résistance aux coupures supérieure au facteur 1,2, plus particulièrement supérieure au facteur 2,5, de préférence supérieure au facteur 5, de préférence supérieure au facteur 10, plus particulièrement de préférence supérieure au facteur 20, selon DIN EN 388:2003.

13. Matériau textile selon l'une des revendications précédentes, le matériau textile (1) présentant une résistance à la déchirure supérieure à 25 newton, de préférence supérieure à 50 newton, de préférence supérieure à 75 newton, selon DIN EN 388:2003 et/ou
le matériau textile (1) présentant une résistance à l'abrasion supérieure à 100 cycles, plus particulièrement supérieure à 500 cycles, de préférence supérieure à 1000 cycles, de préférence supérieure à 2000 cycles, plus particulièrement de préférence supérieure à 5000 cycles, selon DIN EN 388:2003.

14. Matériels de protection, plus particulièrement tenues de protection, gants de protection, chaussures de protection et revêtements de protection, fabriqués à l'aide d'un matériau textile (1) selon l'une des revendications précédentes et/ou comprenant un matériau textile (1) selon l'une des revendications précédentes.

15. Utilisation d'un matériau textile (1) selon l'une des revendications précédentes pour la fabrication de matériels de protection de toutes sortes, plus particulièrement de tenues de protection, de gants de protection, de chaussures de protection et de revêtements de protection, de préférence pour une utilisation ABC.
